Europäisches Patentamt

(19) European Patent Office

Office européen des brevets

(11) Numéro de publication: **0 124 442**
**B1**

(12) **FASCICULE DE BREVET EUROPÉEN**

(51) Int. Cl. ⁵: **G 01 N 29/04, G 03 H 3/00**

(45) Date de publication du fascicule du brevet:
07.02.90

(21) Numéro de dépôt: 84400851.6

(22) Date de dépôt: 26.04.84

(54) Procédé et dispositif d'holographie acoustique utilisant un faisceau ultrasonore limité dans l'espace.

(30) Priorité: 29.04.83 FR 8307166

(43) Date de publication de la demande:
07.11.84 Bulletin 84/45

(45) Mention de la délivrance du brevet:
07.02.90 Bulletin 90/06

(84) Etats contractants désignés:
DE FR GB IT NL

(56) Documents cité:
DE-A-2 352 672
DE-A-2 923 687
FR-A-2 298 921

SCHWEISSEN UND SCHNEIDEN, vol. 35, no. 5, 1983, pages 224-227, Düsseldorf, DE; H. WÜSTENBERG et al.: "Zur Bedeutung der akustischen Linienholografie für die Fehlergrössenbestimmung mit Ultraschall"

(73) Titulaire: **COMMISSARIAT A L'ENERGIE ATOMIQUE**
**31/33, rue de la Fédération**
**F-75015 Paris (FR)**

(72) Inventeur: **de Vadder, Daniel**
**15, rue de Chateaubourg**
**F-91370 Verrieres le Buisson (FR)**
Inventeur: **Saglio, Robert**
**9 rue des Marchais**
**F-92160 Antony (FR)**

(74) Mandataire: **Mongrédien, André**
**c/o BREVATOME 25, rue de Ponthieu**
**F-75008 Paris (FR)**

EP 0 124 442 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe dípposition (Art. 99(1) Convention sur le brevet européen).

## Description

La présente invention concerne un procédé et un dispositif d'holographie acoustique utilisant un faisceau ultrasonore limité dans l'espace. Elle s'applique notamment au contrôle non destructif de pièces mécaniques.

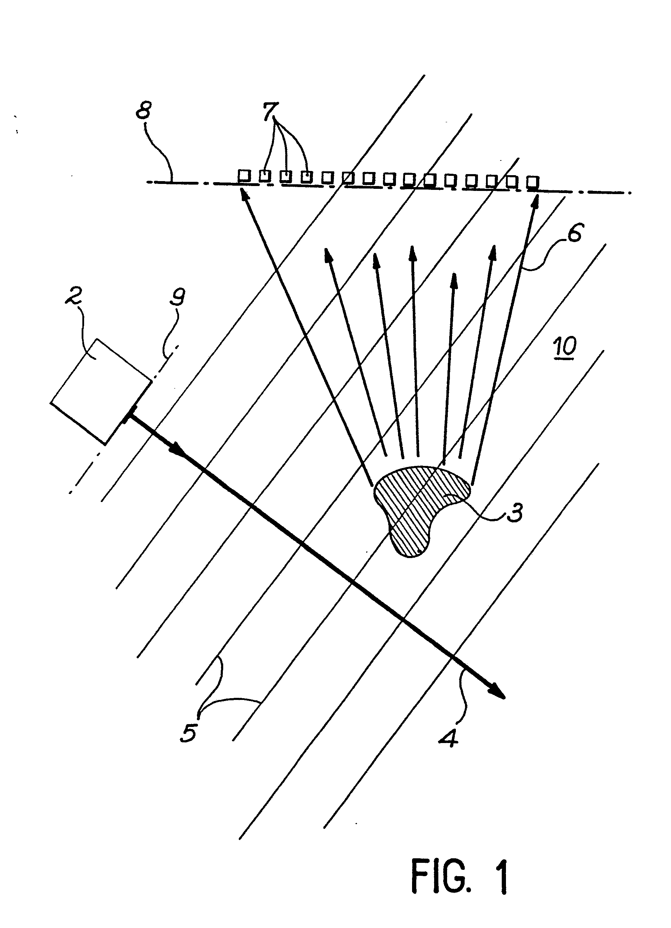

Le principe de l'holographie acoustique est rappelé en référence à la figure 1: à l'aide d'un transducteur ultrasonore 2, apte à émettre des ondes ultrasonores planes, on insonifie un ou plusieurs défauts 3, c'est-à-dire une ou plusieurs discontinuités matérielles dans un objet. En d'autres termes, on excite le ou les défauts par un faisceau ultrasonore émis par le transducteur et ainsi appelé "faisceau d'insonification". Sur la figure 1, on voit la direction 4 du faisceau ultrasonore ainsi que les plans d'onde 5 perpendiculaires à cette direction. Le faisceau 6 diffracté et réfléchi par le ou les défauts 3 est analysé en plusieurs points 7 alignés dans un plan d'examen 8, qui peut être différent du plan d'émission 9 à partir duquel est émis le faisceau d'insonification, par comparaison avec un faisceau de référence semblable au faisceau d'insonification. Ceci permet de déterminer, pour chacun des points 7 du plan d'examen 8, la phase et l'amplitude du signal reçu en ce point. La reconstitution du ou des défauts 3 est alors effectuée en calculant ou en reconstituant, par tout moyen approprié, la pression acoustique dans le volume examiné 10 contenant le ou les défauts 3, pression qui serait engendrée par un émetteur situé dans le plan d'examen 8 et qui aurait pour caractéristiques d'amplitude et de phase, celles qui ont été préalablement déterminées.

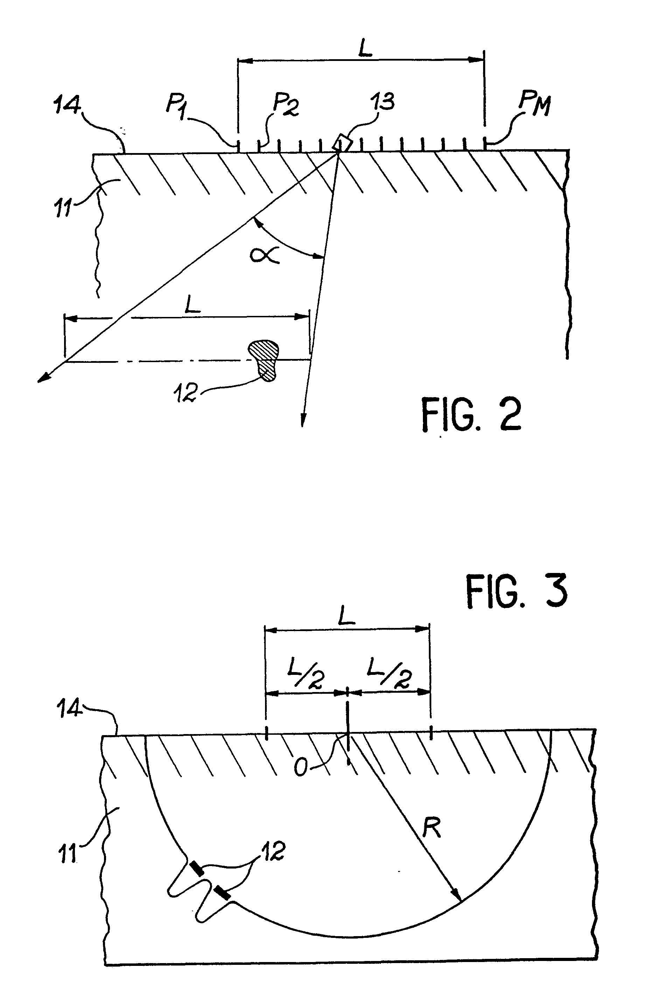

On connaît un procédé et un dispositif d'holographie acoustique qui vont être expliqués en référence aux figures 2 et 3. De plus, seule l'holographie acoustique dans un plan, c'est-à-dire l'holographie de sections planes d'objets, est envisagée sur ces figures 2 et 3, l'examen d'un volume étant obtenu en réalisant successivement des hologrammes dans des plans de section parallèles dudit volume. Sur la figure 2, on a représenté une section plane d'une pièce mécanique 11 contenant un défaut 12, le plan de section étant confondu avec le plan de la figure 2. Le dispositif connu, utilisé pour réaliser l'holographie acoustique du défaut, comprend un transducteur ultrasonore émetteur-récepteur 13 dont l'angle de divergence $\alpha$ est très grand et qui est rectilignement déplaçable sur la surface 14 de la pièce 11, cette surface étant supposée plane. Le transducteur 13 est destiné à occuper M positions successives $P_1$, $P_2$, ..., $P_M$ séparées les unes des autres d'une distance au plus égale à la longueur d'onde d'émission du transducteur. L'occupation des M positions successives par le transducteur 13 permet au faisceau acoustique émis par ce dernier d'insonifier le défaut suivant plusieurs orientations, à l'intérieur de l'ouverture L du faisceau, égale à la distance qui sépare les deux positions extrêmes $P_1$ et $P_M$ du transducteur 13. Pour chacune des M positions, un signal est émis par le transducteur 13 fonctionnant en tant qu'émetteur, le signal d'écho renvoyé par le défaut 12 est capté par ledit transducteur fonctionnant alors en tant que récepteur et la phase ainsi que l'amplitude du signal d'écho sont évaluées. En fait, ce sont la partie réelle et la partie imaginaire du signal d'écho (considéré sous forme complexe) qui, de façon équivalente, sont évaluées. On connaît ainsi la répartition acoustique amplitudes-phases à la surface 14 de la pièce 11. A partir de ces amplitudes et ces phases, la pression acoustique correspondante est calculée (figure 3) sur un cercle dont le centre est un point 0 situé à la surface 14 de la pièce 11 et au milieu de l'ouverture L du transducteur, et dont le rayon R est égal à la distance correspondant au trajet acoustique nécessaire pour atteindre le ou les défauts 12. Sur ce cercle, la pression acoustique est maximale en le ou les points faisant partie du ou des défauts 12.

Le procédé et le dispositif connus que l'on vient de décrire, permettent d'obtenir, pratiquement en temps réel, une évaluation de la taille des défauts présents dans des pièces mécaniques, suivant une direction donnée, au moyen d'un montage mécanique et d'algorithmes mathématiques assez simples mais présentent cependant de nombreux inconvénients dont les principaux sont les suivants:

D'une part, ce procédé et ce dispositif ne donnent qu'un très faible rapport signal/bruit. En effet, le faisceau ultrasonore émis par le transducteur est très divergent et la pression acoustique est proportionnelle à $z^{-2} \alpha^{-1}$, z étant la distance entre le transducteur et le défaut et $\alpha$ étant l'angle solide de divergence dudit faisceau. L'amplitude du signal reçu par le transducteur est donc une fonction très rapidement décroissante de la distance z et de l'angle solide $\alpha$, alors que le bruit, lié à la structure, est une fonction croissante de l'angle solide $\alpha$.

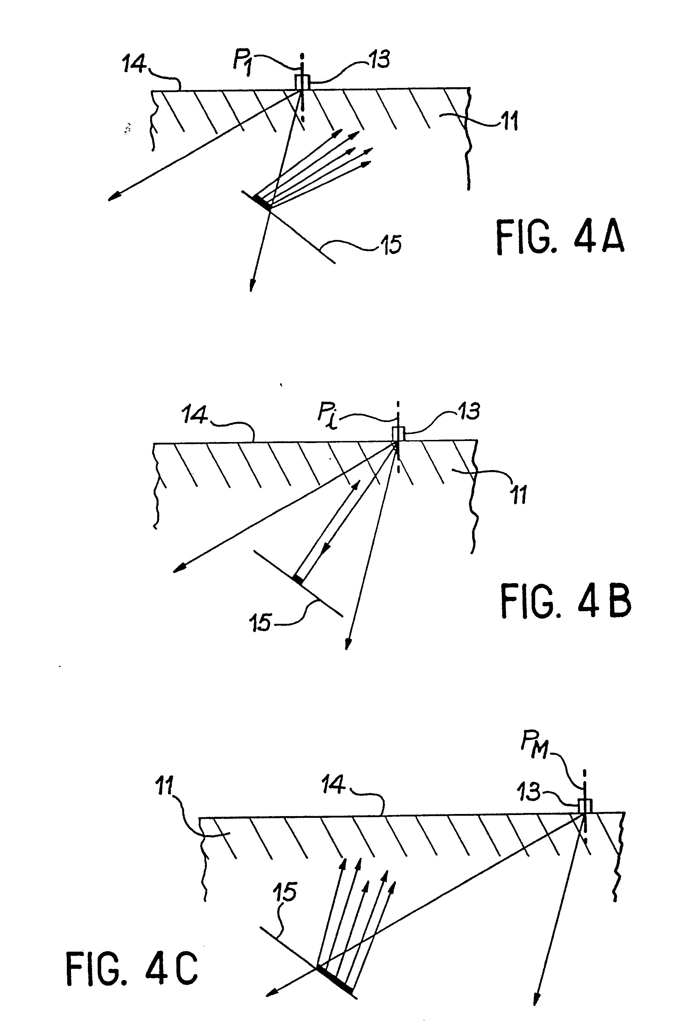

D'autre part, ce procédé et ce dispositif ne permettent pas d'obtenir une bonne reconstitution des grands défauts plans ou du moins donnent des reconstitutions dont la qualité est fortement dépendante de l'orientation des défauts étudiés. En effet, étant donné un grand défaut plan 15 dans la pièce 11, même si pour une position $P_i$ du transducteur 13, intermédiaire entre les positions extrêmes $P_1$ et $P_M$, la direction moyenne d'insonification est perpendiculaire audit défaut 15 et rencontre celui-ci en son milieu (figure 4B), entraînant ainsi la réception d'un écho important par ce transducteur, l'insonification du défaut sur ses bords, correspondant aux positions extrêmes $P_1$ et $P_M$ du transducteur, donne un signal d'écho pratiquement nul sur le transducteur, ce signal d'écho étant alors envoyé en dehors du faisceau d'insonification (figures 4A et 4C).

La présente invention a pour objet un procédé et un dispositif d'holographie acoustique qui ne présentent pas les inconvénients des procédés et des dispositifs existants, notamment en ce qu'ils permettent d'améliorer considérablement le rapport signal/bruit et de réduire la sensibilité à l'orientation des défauts étudiés.

On connaît déjà, par le document DE-A-2 923 687, un procédé d'holographie acoustique consistant à balayer un secteur au moyen d'ultrasons issus d'une barrette de transducteurs ultrasonores émetteurs-récepteurs; à mémoriser les signaux revenant vers la barrette; à additionner ces signaux; à mesurer l'amplitude et la phase du signal résultant et à mémoriser celui-ci; à déplacer la barrette d'une distance dx puis à recommencer les opérations précédentes; et à effectuer une reconstitution de la zone contrôlée, en utilisant les données mémorisées.

De façon précise, la présente invention vise un procédé d'holographie acoustique d'une zone à contrôler dans un objet, cette zone étant susceptible de contenir au moins un défaut, procédé dans lequel:

– on détecte des signaux ultrasonores susceptibles de provenir de zones insonifiées, en réponse à des ultrasons d'insonification de la zone à contrôler, et
– on effectue une reconstitution de la zone à contrôler en utilisant les signaux ultrasonores détectés, caractérisé en ce que:
– on insonifie la zone à contrôler au moyen d'un émetteur d'ultrasons engendrant un faisceau ultrasonore limité dans l'espace, en déplaçant ledit émetteur de manière à insonifier successivement M zones dont la réunion englobe la zone à contrôler,
– on détecte des signaux ultrasonores susceptibles de provenir des M zones successivement insonifiées, en réponse audit faisceau ultrasonore, au moyen de plusieurs récepteurs d'ultrasons présentant des espacements les uns entre les autres,
– on détermine les valeurs caractéristiques des signaux ultrasonores détectés, et
– on effectue une reconstitution de la zone à contrôler au moyen desdites valeurs caractéristiques, ladite reconstitution comportant une image principale du défaut et éventuellement des images secondaires de ce défaut à cause desdits espacements,

en ce que le nombre N de récepteurs est préalablement déterminé de façon que la distance entre chaque image secondaire et l'image principale soit supérieure à la largeur des zones insonifiées par l'émetteur et en ce que la reconstitution est effectuée seulement dans les zones insonifiées qui ont donné naissance à un signal ultrasonore, de manière à éliminer les images secondaires de la reconstitution de la zone à contrôler.

Par "défaut", on entend toute discontinuité matérielle dans l'objet. Il s'agit par exemple d'une fissure ou d'une bulle dans une pièce mécanique.

Par "valeurs caractéristiques des signaux ultrasonores", on entend les couples phase-amplitude correspondant auxdits signaux, ou encore tous les couples équivalents aux précédents, tels que les parties réelles et imaginaires des signaux. De préférence, ledit faisceau ultrasonore limité dans l'espace est un faisceau ultrasonore focalisé. La notion de faisceau ultrasonore focalisé sera, quant à elle, expliquée par la suite.

La présente invention vise également un dispositif d'holographie acoustique d'une zone à contrôler dans un objet, cette zone étant susceptible de contenir au moins un défaut, ce dispositif comprenant:

– une pluralité de récepteurs d'ultrasons prévus pour détecter des signaux ultrasonores susceptibles de provenir de zones insonifiées, en réponse à des ultrasons d'insonification de la zone à contrôler, et
– des moyens de traitement des signaux ultrasonores détectés, prévus pour effectuer une reconstitution de la zone à contrôler en utilisant les signaux ultrasonores détectés, caractérisé en ce qu'il comprend en outre:
– un émetteur d'ultrasons apte à engendrer un faisceau ultrasonore limité dans l'espace et prévu pour insonifier la zone à contrôler,
– des moyens de déplacement dudit émetteur, permettant à ce dernier d'insonifier successivement M zones dont la réunion englobe la zone à contrôler,

en ce que les récepteurs d'ultrasons présentent des espacements les uns entre les autres et sont prévus pour détecter des signaux ultrasonores susceptibles de provenir des M zones successivement insonifiées, en réponse audit faisceau ultrasonore, en ce que les moyens de traitement des signaux ultrasonores détectés sont prévus pour déterminer les valeurs caractéristiques desdits signaux et pour effectuer la reconstitution de la zone à contrôler à l'aide desdites valeurs caractéristiques, ladite reconstitution comportant une image principale du défaut et éventuellement des images secondaires de ce défaut à cause desdits espacements, en ce que le nombre N de récepteurs est préalablement déterminé de façon que la distance entre chaque image secondaire et l'image principale soit supérieure à la largeur des zones insonifiées par l'émetteur et en ce que les moyens de traitement sont prévus pour effectuer la reconstitution seulement dans les zones insonifiées qui ont donné naissance à un signal ultrasonore, de manière à éliminer les images secondaires de la reconstitution de la zone à contrôler.

Selon un mode de réalisation particulier du dispositif objet de l'invention, les N récepteurs sont fixes, les moyens de déplacement sont destinés à positionner successivement l'émetteur en M positions différentes correspondant respectivement auxdites M zones, chaque récepteur recevant alors successivement au plus M signaux ultrasonores, et les moyens de traitement sont prévus pour additionner, pour chaque récepteur, ces MT signaux ultrasonores, de manière à former N sommes de signaux, et pour effectuer la reconstitution de la zone à contrôler à partir de ces N sommes.

Dans ce cas, les récepteurs peuvent être avantageusement conçus et disposés de façon à avoir un diagramme spatial de réception qui enveloppe la zone à contrôler. Ceci permet d'augmenter encore plus le rapport signal/bruit.

Selon un autre mode de réalisation particulier du dispositif objet de l'invention, les N récepteurs sont mobiles et rendus rigidement solidaires de l'émetteur, les moyens de déplacement sont destinés à positionner l'émetteur en M positions différentes correspondant respectivement auxdites M zones, et en ce que les moyens de traitement sont prévus pour effectuer une reconstitution de la zone insonifiée à chaque position de l'émetteur.

Selon une amélioration de cet autre mode de réalisation particulier, les moyens de déplacement sont des moyens de translation, les récepteurs sont en outre alignés suivant la direction de cette translation et équidistants les uns des autres suivant un pas p donné, et les moyens de déplacement sont en outre prévus pour déplacer l'ensemble constitué par l'émetteur et les récepteurs, par pas successifs inférieurs au pas des récepteurs. Etant donné une zone insonifiée par l'émetteur, on peut ainsi augmenter considérablement le nombre d'informations reçues par les récepteurs, sans modifier pratiquement la zone insonifiée.

Selon un perfectionnement de cet autre mode de réalisation particulier, les récepteurs sont conçus et orientés de façon à avoir un diagramme spatial de réception qui enveloppe la zone insonifiée par l'émetteur. Ceci permet d'augmenter le rapport signal/bruit.

Enfin, selon une caractéristique particulière de l'invention, ledit émetteur d'ultrasons est un transducteur focalisé qui peut être monolithique ou non. On peut par exemple utiliser une sonde focalisante ou encore une barrette de transducteurs piézoélectriques dont la focalisation est réalisée électroniquement grâce à des lignes à retard électroniques, de façon connue dans l'état de la technique.

L'invention sera mieux comprise à la lecture de la description qui suit, d'exemples de réalisation donnés à titre indicatif et non limitatif, en référence aux dessins annexés sur lesquels:

- la figure 1 est un schéma pour expliquer le principe de l'holographie acoustique, et a déjà été décrite,
- la figure 2 est un schéma explicatif d'une technique connue d'holographie acoustique et a déjà été décrite,
- la figure 3 est un schéma explicatif de la reconstitution de défauts par cette technique connue et a déjà été décrite,
- les figures 4A, 4B et 4C sont des vues schématiques traduisant un inconvénient de cette technique connue et ont déjà été décrites,
- la figure 5 est une vue schématique d'un transducteur focalisé utilisé dans l'invention,
- la figure 6 est une vue schématique des images secondaires que l'on risque d'observer dans la reconstitution d'un objet en holographie acoustique,
- la figure 7 est une vue schématique d'un mode de réalisation particulier du dispositif objet de l'invention, et
- la figure 8 est une vue schématique d'un autre mode de réalisation particulier du dispositif objet de l'invention.

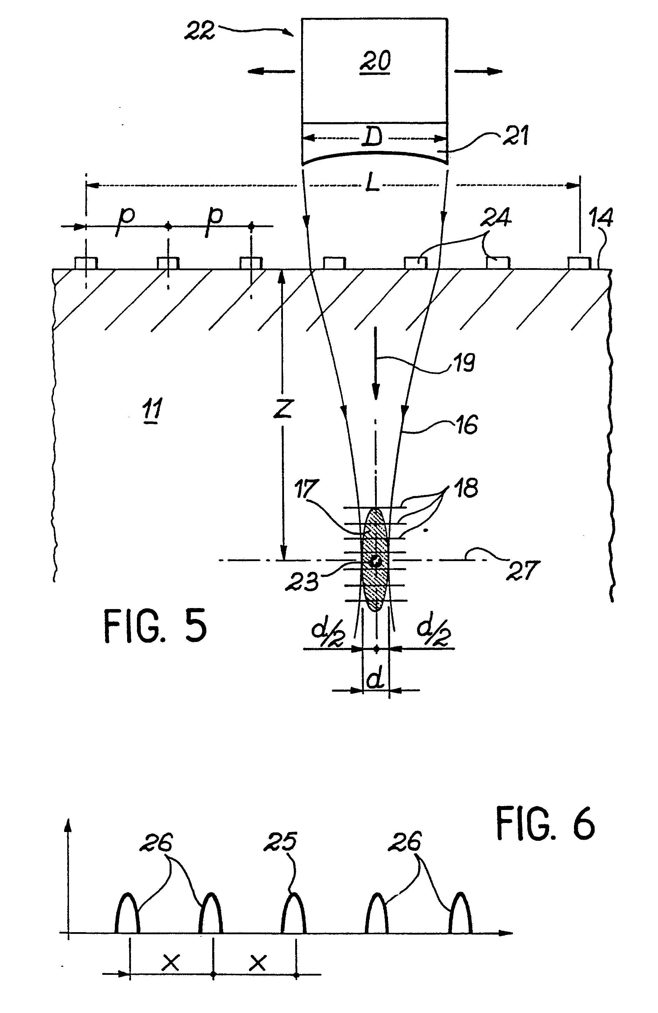

Sur la figure 5, on a représenté schématiquement un faisceau ultrasonore focalisé 16. Il s'agit d'un faisceau ultrasonore convergent, dont la section transverse passe par un minimum et qui insonifie donc un domaine réduit 17 de l'espace, au voisinage de ce minimum. En outre, un tel faisceau focalisé a la propriété suivante: à l'intérieur dudit domaine, les fronts d'onde sont des plans 18 perpendiculaires à la direction de propagation 19 du faisceau. Ce faisceau focalisé peut être obtenu par excitation d'un transducteur piézoélectrique 20 associé à une lentille acoustique de focalisation 21, l'ensemble 22 du transducteur et de la lentille formant ce qu'on appelle un transducteur focalisé.

Selon l'invention, on insonifie un défaut 23 d'une pièce 11 par un faisceau ultrasonore focalisé 16 auquel on fait occuper plusieurs positions successives afin de recréer un champ acoustique homogène. On utilise un nombre fini N de récepteurs d'ultrasons 24 séparés les uns des autres. La reconstitution du défaut 23 fait alors apparaître non seulement l'image réelle 25 du défaut, ou image principale, mais encore des images parasites 26 dudit défaut, ou images secondaires, comme on le voit sur la figure 6 qui représente par exemple la reconstitution visualisée sur l'écran d'un oscilloscope.

Pour des récepteurs 24 alignés dans un plan tel que la surface 14 supposée plane de la pièce 11, et équidistants les uns des autres suivant un pas p, les images 25 ou 26 sont alignées et équidistantes les uns des autres suivant un pas X égal à $\lambda Z/p$, où $\lambda$ est la longueur d'onde du faisceau ultrasonore et Z est la distance entre le plan 14 des récepteurs et le plan de reconstitution, c'est-à-dire un plan 27 parallèle au plan 14 des récepteurs et coupant le défaut 23.

Selon l'invention, on choisit l'écartement p entre les récepteurs (ce qui revient à choisir le nombre N de récepteurs pour un faisceau focalisé d'ouverture L donnée, peu différente du produit $N \cdot p$) de façon que la distance 2X entre les deux images secondaires les plus proches de l'image principale 25 soit supérieure à deux fois la largeur d du domaine, ou zone 17, insonifié par le faisceau 16. En d'autres termes, on choisit le nombre N de récepteurs, de façon que la distance entre chaque image secondaire et l'image principale soit supérieure à la largeur d de la zone insonifiée 17.

Par ailleurs, étant donné les différentes positions successives occupées par le faisceau ultrasonore et donc les zones successivement insonifiées par ledit faisceau, on ne fait la reconstitution que pour les zones ayant donné lieu à un écho, ce qui élimine ainsi toute image parasite de la reconstitution. Ceci est réalisable au moyen d'un calculateur électronique: on commence par déterminer puis numériser les parties réelles et imaginaires des signaux d'écho reçus par les récepteurs 24. On effectue la reconstitution à l'aide du calculateur. Le calcul de reconstitution fait apparaître les images secondaires qui correspondent bien entendu à des zones insonifiées n'ayant donné lieu à aucun écho. On mémorise par ailleurs dans le calculateur toutes les zones insonifiées en repérant celles qui n'ont donné lieu à aucun écho, ce qui permet au calculateur d'éliminer les images secondaires de la reconstitution.

De préférence, le calcul de reconstitution n'est pas effectué dans les zones insonifiées qui n'ont donné lieu à aucun écho, ce qui diminue d'autant le temps de calcul.

La valeur du pas X entre les images, donnée plus haut, permet de déterminer le nombre N de récepteurs. La condition imposée au pas X, également donnée plus haut, est la suivante:

$$X > d \text{ ou } \lambda Z/p > d \quad (1)$$

Puisque $N \cdot p$ est voisin de L, l'inégalité (1) devient:

$$N > Ld \cdot (\lambda Z)^{-1} \quad (2)$$

La présente invention utilise un faisceau focalisé qui insonifie un domaine de largeur d réduite et permet donc, d'après l'inégalité (2), de n'utiliser qu'un petit nombre N de récepteurs. (La distance Z est déterminable par échographie par exemple).

Le pouvoir séparateur latéral d'un dispositif d'holographie acoustique est égal à $2\lambda Z \cdot (Np)^{-1}$. A pouvoir séparateur égal, l'invention, qui utilise peu de récepteurs ultrasonores, est donc moins coûteuse, plus simple à mettre en oeuvre, et moins consommatrice de temps de calcul, que les techniques connues qui nécessitent un grand nombre de récepteurs ultrasonores.

L'invention permet d'améliorer considérablement le rapport signal/bruit, par rapport au procédé et au dispositif mentionnés plus haut, en référence aux figures 2 et 3. En effet, l'intensité acoustique sur le défaut, à ouverture L et distance Z équivalentes, est augmentée, pour l'holographie dans un plan, d'un facteur égal à:

$$(D/d) \cdot L \cdot (M/L) = D \cdot M/d$$

où M représente le nombre de positions que le transducteur d'insonification occupe successivement et D représente le diamètre de ce transducteur. Le rapport D/d représente le facteur de concentration lié à la convergence du transducteur d'insonification. Le rapport L/(L/M) représente le facteur d'affaiblissement lié au fait qu'il existe M positions sur une longueur L d'examen. L'invention conduit donc à des gains en sensibilité qui peuvent dépasser 1000 avec M au moins égal à 50 et D/d au moins égal à 30. Dans le cas d'une holographie en trois dimensions, le gain est encore plus important et peut dépasser $10^6$.

En outre, avec la présente invention, la sensibilité à l'orientation est réduite, par rapport au procédé et au dispositif mentionnés plus haut, car l'angle d'incidence sur un défaut plan du faisceau d'insonification ne se modifie pas tout au long de l'examen du défaut et dans ces conditions, la détectabilité est maximale.

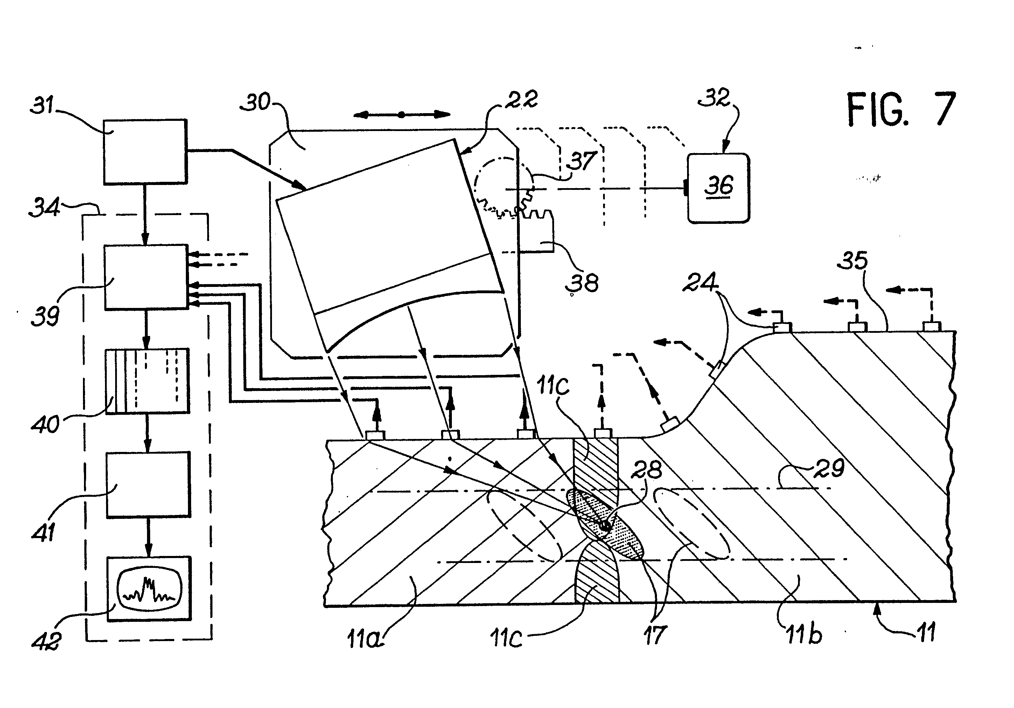

Sur la figure 7, on a représenté schématiquement un mode de réalisation particulier du dispositif d'holographie ultrasonore objet de l'invention. Il est destiné à contrôler une pièce 11 formée par exemple de deux parties 11a et 11b assemblées l'une l'autre par une soudure 11c. C'est cette soudure que l'on souhaite précisément contrôler. Si elle présente un défaut 28, celui-ci peut être mis en évidence en contrôlant, grâce au dispositif selon l'invention, une zone 29 contenant ce défaut. Ce dispositif comprend essentiellement:

- un émetteur d'ultrasons focalisé 22, monté sur un support 30 et activé par des moyens électroniques de commande 31,
- des moyens 32 de déplacement de l'émetteur 22,
- des récepteurs d'ultrasons 24, et
- des moyens 34 de traitement de signaux ultrasonores détectés par les récepteurs.

Les moyens 32 de déplacement permettent de déplacer par translation l'émetteur 22 au-dessus de la surface 35 de la pièce 11, cette surface pouvant être d'ailleurs quelconque. Les moyens 32 de déplacement comportent par exemple un moteur pas à pas 36 commandant un pignon 37 engrênant sur un rail denté 38 rendu rigidement solidaire du support 30 de l'émetteur 22. Les récepteurs 24 sont fixés en ligne sur la surface de la pièce 11, au-dessus de la zone à contrôler 29, et à égale distance les uns des autres. Le nombre N de ces récepteurs est déterminé de façon à éliminer toute image secondaire de la reconstitution du défaut 28. Pour augmenter le rapport signal/bruit, les récepteurs sont de préférence conçus et orientés de façon que leur diagramme spatial de réception enveloppe la zone à contrôler.

Le fonctionnement du dispositif selon l'invention est le suivant: grâce aux moyens 32 de déplacement, on positionne successivement l'émetteur 22 en M positions différentes situées au-dessus de la zone à contrôler, par des translations de même pas, par exemple inférieur ou égal à la demi-largeur du domaine insonifié par l'émetteur, de façon que ce dernier puisse insonifier successivement M zones 17 dont la réunion englobe la zone à contrôler 29. Chaque récepteur reçoit alors successivement au plus M signaux ultrasonores provenant des M zones successivement insonifiées, en réponse au faisceau ultrasonore focalisé et convertissent ces signaux ultrasonores en signaux électriques qui sont transmis aux moyens 34 de traitement permettant la reconstitution de la zone à contrôler et donc du défaut.

Ces moyens 34 de traitement comprennent des moyens 39 de détermination des parties réelles et imaginaires des signaux ultrasonores, des moyens 40 de mémorisation et de sommation de ces signaux (bien entendu représentés par leurs parties réelles et imaginaires), des moyens 41 de reconstitution de la zone à contrôler et des moyens 42 de visualisation.

Les moyens 39 de détermination sont reliés aux récepteurs 24 et également aux moyens 31 de commande de l'émetteur fournissant ainsi auxdits moyens 39 de détermination un signal électronique de référence, homologue du faisceau focalisé émis par l'émetteur 22 et considéré comme faisceau de référence.

Les moyens 40 de mémorisation et de sommation sont reliés aux moyens 39 de détermination et additionnent, pour chaque récepteur, les M signaux successifs correspondant à celui-ci, formant ainsi N sommes de signaux. Les moyens 41 de reconstitution, reliés aux moyens 40 de mémorisation et de sommation, reconstituent le défaut à l'aide de ces N sommes.

Enfin, les moyens 42 de visualisation, reliés aux moyens 41 de reconstitution, sont par exemple formés d'une imprimante ou d'un récepteur à tube cathodique.

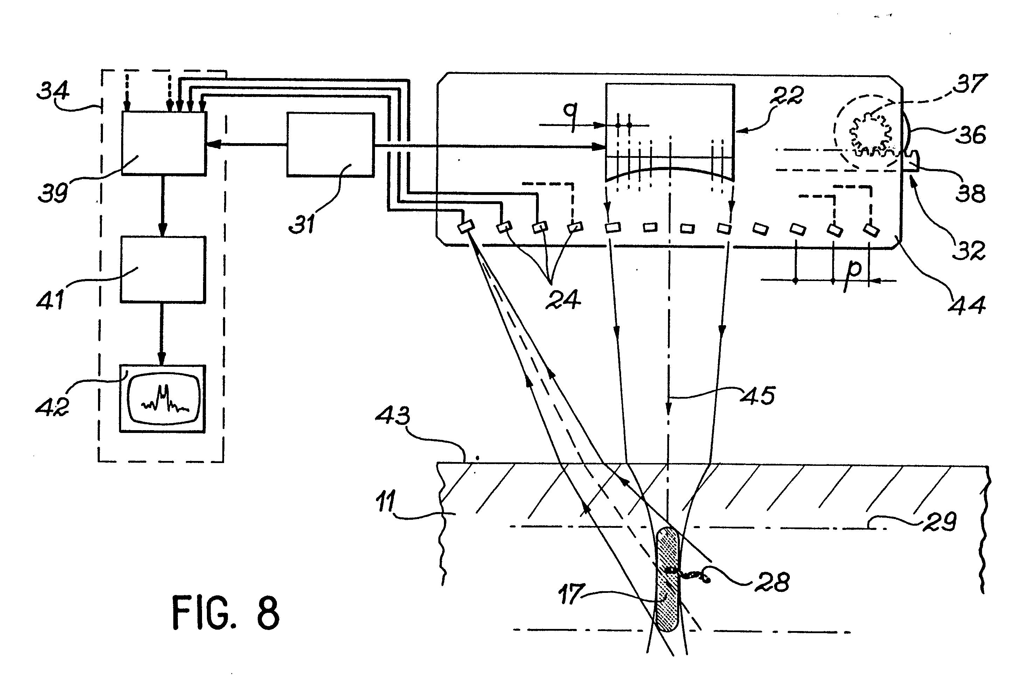

Sur la figure 8, on a représenté schématiquement un autre mode de réalisation particulier du dispositif objet de l'invention, permettant de reconstituer un défaut 28 présent dans une pièce 11 dont la surface 43 est par exemple plane. Le dispositif représenté sur la figure 8 comprend essentiellement un émetteur ultrasonore focalisé 22, des récepteurs ultrasonores 24 rendus rigidement solidaires de l'émetteur 22 par l'intermédiaire d'un support commun 44, des moyens 32 de déplacement de l'émetteur (et donc des récepteurs) et des moyens 34 de traitement de signaux ultrasonores détectés par les récepteurs 24.

Comme pour le dispositif de la figure 7, les moyens 32 de déplacement comportent par exemple un moteur pas à pas 36, entraînant un pignon 37 engrènant sur un rail denté 38 rendu solidaire dudit support commun 44, et permettent de déplacer ce support par translation, au-dessus de la partie de la surface 43 dominant le défaut 28 et parallèlement à cette surface.

L'émetteur 22 est par exemple fixé sur le support 44 de façon que la direction 45 du faisceau qu'il est susceptible d'émettre soit perpendiculaire à la surface 43. Les récepteurs 24 sont alignés sur le support, à équidistance les uns des autres suivant un pas p, et de façon à être situés entre l'émetteur et la pièce 11. La petite taille des récepteurs ne perturbe pratiquement pas le faisceau issu de l'émetteur. Ces récepteurs sont par exemple répartis de façon sensiblement symétrique par rapport à la direction 45. De préférence, pour augmenter le rapport signal/bruit, ils sont orientés vers la zone 17 insonifiée par l'émetteur et dimensionnés pour recevoir toute information provenant de cette zone 17. Bien entendu, comme précédemment, le nombre N des récepteurs est choisi de façon à éliminer toute image secondaire de la reconstitution du défaut.

Les moyens 34 de traitement sont constitués de la même façon que ceux qui ont été précédemment décrits en référence à la figure 7, excepté qu'ils ne comportent pas les moyens 40 de mémorisation et de sommation, les moyens 39 de détermination étant, dans le cas du dispositif de la figure 8, directement reliés aux moyens 41 de reconstitution. De même, l'émetteur 22 est relié à ses moyens 31 de commande qui sont également reliés aux moyens 39 de détermination pour fournir à ceux-ci un signal électrique de référence.

Le fonctionnement du dispositif représenté sur la figure 8 est le suivant: grâce aux moyens 32 de déplacement, on effectue des translations successives de l'émetteur, ces translations ayant le même pas, par exemple égal au pas p des récepteurs, et permettant de positionner successivement l'émetteur en M points différents à partir desquels il peut insonifier respectivement M zones dont la réunion englobe la zone 29 à contrôler contenant le défaut. Pour chaque position de l'émetteur, les récepteurs captent les échos éventuels provenant de la zone insonifiée 17 correspondante et une reconstitution de ladite zone insonifiée est effectuée, la zone à contrôler étant ainsi progressivement reconstituée (en M étapes).

Au lieu d'effectuer des translations de l'émetteur, (et donc des récepteurs), de pas p, on peut effectuer des translation de l'ensemble émetteur-récepteur de pas q inférieur à p, de manière à obtenir plus d'informations sur la zone à contrôler: par exemple, avec un pas q égal à p/3, en déplaçant ledit ensemble de trois fois une distance égale à p/3, à partir d'une position donnée de l'émetteur, l'insonification de la zone correspondante ne change pratiquement pas, tout se passant comme si l'émetteur restait immobile et si l'on avait trois fois plus de récepteurs. On peut également dire qu'en utilisant des translations de pas p/3, on a besoin de trois fois moins de récepteurs qu'avec des translations de pas p, pour avoir le même nombre d'informations.

Dans la description des figures 7 et 8, on a considéré une simple ligne de récepteurs permettant une holographie "linéaire" c'est-à-dire une holographie dans un plan (le plan de figure). Bien entendu, on ne sortirait pas du cadre de l'invention, en réalisant un dispositif comportant plusieurs dispositifs tels que celui de la figure 7 ou 8 et en juxtaposant les lignes de récepteurs correspondantes, de manière à faire un examen "en volume" d'un objet.

L'invention est également applicable à la technique d'addition de signaux recalés en temps, utilisée dans la méthode dite SAFT (Synthetic Aperture Focusing Technique). Dans cette méthode connue, on utilise un transducteur émetteur-récepteur émettant une impulsion ultrasonore brève focalisée à la surface de l'échantillon de manière à produire à l'intérieur de celui-ci, un faisceau largement divergent; le même transducteur utilisé en tant que récepteur recueille les ultrasons renvoyés par les défauts de l'échantillon. les signaux étant numérisés et enregistrés. Le signal représentatif d'un défaut est obtenu par déphasage entre les signaux recueillis par le récepteur en des positions voisines, et recombinaison des signaux déphasés, ce qui permet d'améliorer le rapport signal sur bruit.

L'application de l'invention à cette méthode consiste à utiliser un faisceau d'émission focalisé et un nombre réduit de transducteurs récepteurs suffisamment espacés pour que les artefacts dus à ce nombre réduit ne puissent apparaître qu'en dehors de la zone insonifiée et qu'on puisse ne pas en tenir compte. Selon l'invention, on diminue le nombre d'informations à enregistrer et traiter, principal inconvénient de la méthode SAFT.

**Revendications**

1. Procédé d'holographie acoustique d'une zone (29) à contrôler dans un objet (11), cette zone étant susceptible de contenir au moins un défaut (28), procédé dans lequel:

- on détecte des signaux ultrasonores susceptibles de provenir de zones insonifiées, en réponse à des ultrasons d'insonification de la zone à contrôler, et
- on effectue une reconstitution de la zone à contrôler en utilisant les signaux ultrasonores détectés, caractérisé en ce que:
- on insonifie la zone à contrôler au moyen d'un émetteur (22) d'ultrasons engendrant un faisceau ultrasonore limité dans l'espace, en déplaçant ledit émetteur de manière à insonifier successivement M zones (17) dont la réunion englobe la zone à contrôler (29),
- on détecte des signaux ultrasonores susceptibles de provenir des M zones successivement insonifiées, en réponse audit faisceau ultrasonore, au moyen de plusieurs récepteurs d'ultrasons (24) présentant des espacements les uns entre les autres,
- on détermine les valeurs caractéristiques des signaux ultrasonores détectés, et
- on effectue une reconstitution de la zone à contrôler au moyen desdites valeurs caractéristiques, ladite reconstitution comportant une image principale du défaut (28) et éventuellement des images secondaires de ce défaut à cause desdits espacements, en ce que le nombre N de récepteurs (24) est préalablement déterminé de façon que la distance entre chaque image secondaire et l'image principale soit supérieure à la largeur des zones insonifiées par l'émetteur (22) et en ce que la reconstitution est effectuée seulement dans les zones insonifiées qui ont donné naissance à un signal ultrasonore, de manière à éliminer les images secondaires de la reconstitution de la zone à contrôler.

2. Dispositif d'holographie acoustique d'une zone (29) à contrôler dans un objet (11), cette zone étant susceptible de contenir au moins un défaut, ce dispositif comprenant:

- une pluralité de récepteurs d'ultrasons prévus pour détecter des signaux ultrasonores susceptibles de provenir de zones insonifiées, en réponse à des ultrasons d'insonification de la zone à contrôler, et
- des moyens de traitement des signaux ultrasonores détectés, prévus pour effectuer une reconstitution de la zone à contrôler en utilisant les signaux ultrasonores détectés, caractérisé en ce qu'il comprend en outre:
- un émetteur (22) d'ultrasons apte à engendrer un faisceau ultrasonore limité dans l'espace et prévu pour insonifier la zone à contrôler,
- des moyens (32) de déplacement dudit émetteur, permettant à ce dernier d'insonifier successivement M zones (17) dont la réunion englobe la zone à contrôler (29),

en ce que les récepteurs d'ultrasons (24) présentent des espacements les uns entre les autres et sont prévus pour détecter des signaux ultrasonores susceptibles de provenir des M zones successivement insonifiées, en réponse audit faisceau ultrasonore, en ce que les moyens (34) de traitement des signaux ultrasonores détectés sont prévus pour déterminer les valeurs caractéristiques desdits signaux et pour effectuer la reconstitution de la zone à contrôler à l'aide desdites valeurs caractéristiques, ladite reconstitution comportant une image principale du défaut (28) et éventuellement des images secondaires de ce défaut à cause desdits espacements, en ce que le nombre N de récepteurs (24) est préalablement déterminé de façon que la distance entre chaque image secondaire et l'image principale soit supérieure à la largeur des zones insonifiées par l'émetteur (22) et en ce que les moyens de traitement sont prévus pour effectuer la reconstitution seulement dans les zones insonifiées qui ont donné naissance à un signal ultrasonore, de manière à éliminer les images secondaires de la reconstitution de la zone à contrôler.

3. Dispositif selon la revendication 2, caractérisé en ce que les N récepteurs (24) sont fixes, en ce que les moyens (32) de déplacement sont destinés à positionner successivement l'émetteur (22) en M positions différentes correspondant respectivement auxdites M zones, chaque récepteur recevant alors successivement au plus M signaux ultrasonores, et en ce que les moyens (34) de traitement sont prévus pour additionner, pour chaque récepteur, ces M signaux ultrasonores, de manière à former N sommes de signaux, et pour effectuer la reconstitution de la zone à contrôler à partir de ces N sommes.

4. Dispositif selon la revendication 3, caractérisé en ce que les récepteurs (24) sont conçus et disposés de façon à avoir un diagramme spatial de réception qui enveloppe la zone à contrôler.

5. Dispositif selon la revendication 2, caractérisé en ce que les N récepteurs (24) sont mobiles et rendus rigidement solidaires de l'émetteur (22), en ce que les moyens (32) de déplacement sont destinés à positionner successivement l'émetteur en M positions différentes correspondant respectivement auxdites M zones, et en ce que les moyens (34) de traitement sont prévus pour effectuer une reconstitution de la zone insonifiée à chaque position de l'émetteur.

6. Dispositif selon la revendication 5, caractérisé en ce que les moyens (32) de déplacement sont des moyens de translation, en ce que les récepteurs (24) sont en outre alignés suivant la direction de cette translation et équidistants les uns des autres suivant un pas p donné, et en ce que les moyens (32) de déplacement sont en outre prévus pour déplacer l'ensemble constitué par l'émetteur (22) et les récepteurs, par pas successifs inférieurs au pas des récepteurs.

7. Dispositif selon l'une quelconque des revendications 5 et 6, caractérisé en ce que les récepteurs (24) sont conçus et orientés de façon à avoir un diagramme spatial de réception qui enveloppe la zone insonifiée par l'émetteur (22).

8. Dispositif selon l'une quelconque des revendications 1 à 7, caractérisé en ce que ledit émetteur d'ultrasons (22) est un transducteur focalisé.

**Patentansprüche**

1. Verfahren zur akustischen Holographie einer möglicherweise wenigstens einen Fehler (28) enthaltenden Prüfzone (29) in einem Gegenstand (11), bei welchem man

- in Reaktion auf für die Beschallung der Prüfzone angewendete Ultraschallwellen gegebenenfalls von beschallten Zonen ausgehende Ultraschallsignale aufnimmt und
- unter Verwendung der aufgenommenen Ultraschallsignale eine Rekonstruktion der Prüfzone vornimmt, dadurch *gekennzeichnet*, daß
- man die Prüfzone unter Verwendung eines ein räumlich begrenztes Ultraschallwellenbündel erzeugenden Ultraschallsenders (22) beschallt, indem man den Sender derart fortbewegt, daß nacheinander M Zonen (17) beschallt werden, deren Gesamtheit die Prüfzone (29) einschließt,
- man die gegebenenfalls in Reaktion auf das Ultraschallwellenbündel von den nacheinander beschallten M Zonen abgegebenen Ultraschallsignale mittels einer Anzahl von in gegenseitigen Abständen angeordneten Ultraschallsensoren (24) aufnimmt,
- die charakteristischen Werte der aufgenommenen Ultraschallsignale bestimmt und
- unter Verwendung dieser charakteristischen Werte eine Rekonstruktion der Prüfzone vornimmt, wobei die Rekonstruktion ein primäres Abbild des Fehlers (28) und aufgrund der genannten Abstände gegebenenfalls sekundäre Abbilder des Fehlers liefert, daß die Anzahl N der Sensoren (24) im Voraus derart bestimmt wird, daß der Abstand zwischen jedem sekundären Abbild und dem primären Abbild größer ist als die Breite der durch den Sender (22) beschallten Zonen, und daß die Rekonstruktion allein in Bezug auf diejenigen der beschallten Zonen durchgeführt wird, in denen ein Ultraschallsignal entstanden ist, um auf diese Weise sekundäre Abbilder aus der Rekonstruktion der Prüfzone auszuschließen.

2. Vorrichtung zur akustischen Holographie einer möglicherweise wenigstens einen Fehler (28) enthaltenden Prüfzone (29) in einem Gegenstand (11), mit einer Anzahl von Ultraschallsensoren zum Aufnehmen von gegebenenfalls in Reaktion auf Ultraschallwellen für die Beschallung der Prüfzone von beschallten Zonen abgegebenen Ultraschallsignalen und einer Einrichtung zum Auswerten der aufgenommenen Ultraschallsignale für eine Rekonstruktion der Prüfzone unter Verwendung der aufgenommenen Ultraschallsignale, dadurch *gekennzeichnet*, daß sie ferner einen Ultraschallsender (22) zum Erzeugen eines räumlich begrenzten Ultraschallwellenbündels für die Beschallung der Prüfzone und eine Einrichtung (32) aufweist, mittels welcher der Sender für die aufeinander folgende Beschallung von M Zonen (17), deren Gesamtheit die Prüfzone (29) einschließt, fortbewegbar ist, daß die Ultraschallsensoren (24) für die Aufnahme der gegebenenfalls von den nacheinander beschallten M Zonen in Reaktion auf das Ultraschallwellenbündel abgebenen Ultraschallsignalen in gegenseitigen Abständen angeordnet sind, daß die Einrichtung (34) zum Auswerten der aufgenommenen Ultraschallsignale für eine Bestimmung der charakteristischen Werte der genannten Signale sowie für eine Rekonstruktion der Prüfzone mit Hilfe der genannten charakteristischen Werte ausgebildet ist, wobei die genannte Rekonstruktion ein primäres Abbild des Fehlers (28) und aufgrund der genannten Abstände gegebenenfalls auch sekundäre Abbilder des Fehlers enthält, daß die Anzahl N der Sensoren (24) im Voraus derart bestimmt ist, daß der Abstand zwischen jedem sekundären Abbild und dem primären Abbild größer ist als die Breite der durch den Sender (22) beschallten Zonen, und daß die Auswerteeinrichtung allein für die Rekonstruktion derjenigen der beschallten Zonen, in denen ein Ultraschallsignal entstanden ist, ausgebildet ist, so daß die sekundären Abbilder aus der Rekonstruktion der Prüfzone ausgeschlossen sind.

3. Vorrichtung nach Anspruch 2, dadurch *gekennzeichnet*, daß die N Sensoren (24) feststehend angeordnet sind, daß der Sender (22) mittels der seiner Fortbewegung dienenden Einrichtung (32) nacheinander in M verschiedene Stellungen bewegbar ist, welche den genannten M Zonen entsprechen, wobei dann jeder Sensor nacheinander höchstens M Ultraschallsignale aufnimmt, und daß die Auswerteeinrichtung (34) zum Addieren der M Ultraschallsignale für jeden Sensor zur Bildung von N Signalsummen und zum Rekonstruieren der Prüfzone auf der Basis dieser N Summen ausgebildet ist.

4. Vorrichtung nach Anspruch 3, dadurch *gekennzeichnet*, daß die Sensoren (24) derart ausgebildet und angeordnet sind, daß sie ein räumliches Aufnahmediagramm liefern, welches die Prüfzone einschließt.

5. Vorrichtung nach Anspruch 2, dadurch *gekennzeichnet*, daß die N Sensoren (24) beweglich und starr mit dem Sender (22) verbunden sind, daß der Sender mittels der seiner Fortbewegung dienenden Einrichtung (32) nacheinander in M verschiedene Stellungen bringbar ist, welche jeweils einer der genannten M Zonen entsprechen, und daß die Auswerteeinrichtung (34) zur Durchführung einer Rekonstruktion der jeweils beschallten Zone in jeder Stellung des Senders ausgebildet ist.

6. Vorrichtung nach Anspruch 5, dadurch *gekennzeichnet*, daß die Fortbewegungseinrichtung (32) eine Verschiebeeinrichtung ist, daß die Sensoren in gleichen gegenseitigen Abständen entsprechend einer gegebenen Teilung p in einer Reihe in Richtung der Verschiebung ausgerichtet sind und daß die aus dem Sender (22) und den Sensoren gebildete Baugruppe mittels der Bewegungseinrichtung (32) in aufeinander folgenden Schritten fortbewegbar ist, welche kleiner sind als die Teilung der Sensoren.

7. Vorrichtung nach einem der Ansprüche 5 und 6, dadurch *gekennzeichnet*, daß die Sensoren (24) derart ausgebildet und angeordnet sind, daß sie ein räumliches Aufnahmediagramm liefern, in welchem die durch den Sender (22) beschallte Zone eingeschlossen ist.

8. Vorrichtung nach einem der Ansprüche 1 bis 7, dadurch *gekennzeichnet*, daß der Ultraschallsender (22) ein fokussierter Wandler ist.

**Claims**

1. Process for acoustic holography of a zone (29) to be inspected in an object (11), said zone being liable to contain at least one fault (28), in which:

- ultrasonic signals liable to come from insonified zones are detected, in response to insonification ultrasonics from the zone to be inspected,
- a reconstitution of the zone to be inspected is carried out using the detected ultrasonic signals, characterized in that:
- the zone to be inspected is insonified by means of an ultrasonic transmitter (22) producing an ultrasonic beam limited in space, by moving said transmitter in such a way as to successively insonify M zones (17), whose combination covers the zone to be inspected (29), ultrasonic signals liable to come from the M successively insonified zones are detected in response to the ultrasonic beam, by means of several ultrasonic receivers (24) having reciprocal spacings,
- the characteristic values of the detected ultrasonic signals are determined and
- a reconstitution takes place of the zone to be inspected by means of said characteristic values, said reconstitution having a main image of the fault (28) and possibly secondary images thereof due to said spacings,

in that the number N of receivers (24) is previously determined in such a way that the distance between each secondary image and the main image exceeds the width of the zones insonified by the transmitter (22) and in that the reconstitution is only performed in the insonified zones which have given rise to an ultrasonic signal, so as to eliminate the secondary images from the reconstitution of the zone to be inspected.

2. Apparatus for the acoustic holography of a zone (29) to be inspected in an object (11), said zone being liable to contain at least one fault, said apparatus comprising:

- a plurality of ultrasonic receivers for detecting ultrasonic signals liable to come from the insonified zones in response to the insonification of ultrasonics from the zone to be inspected,
- means for processing the detected ultrasonic signals for performing a reconstitution of the zone be inspected using the detected ultrasonic signals, characterized in that it also comprises:
- an ultrasonic transmitter (22) able to produce an ultrasonic beam limited in space and serving to insonify the zone to be inspected,
- means (32) for the displacement of said transmitter, enabling the latter to successively insonify M zones (17), whose combination covers the zone to be inspected (29), in that the ultrasonic receivers (24) have reciprocal spacings and serve to detect ultrasonic signals liable to come from the M successively insonified zones in response to said ultrasonic beam, in that the means (34) for processing the detected ultrasonic signals are provided for determining the characteristic values of the signals and for performing the reconstitution of the zone to be inspected with the aid of said characteristic values, said reconstitution involving a main image of the fault (28) and possibly secondary images of said fault due to said spacing, in that the number N of receivers (24) is predetermined in such a way that the distance between each secondary image and the main image exceeds the width of the zones insonified by the transmitter (22) and in that the processing means serve to carry out the reconstitution only in the insonified zones which have given rise to an ultrasonic signal, so as to eliminate the secondary images from the reconstitution of the zone to be inspected.

3. Apparatus according to claim 2, characterized in that the N receivers (24) are fixed, the displacement means (32) serving to successively position the transmitter (22) in M different positions, respectively corresponding to the M zones, each receiver then successively receiving at the most M ultrasonic signals, and in that the processing means (34) serve to summate, for each receiver, these M ultrasonics signals, so as to form N signal sums, and for carrying out the reconstitution of the area to be inspected on the basis of these N sums.

4. Apparatus according to claim 3, characterized in that the receivers (24) are designed and arranged so as to have a spatial reception diagram enveloping the area to be inspected.

5. Apparatus according to claim 2, characterized in that the N receivers (24) are movable and are rendered rigidly integral with the transmitter (22), in that the displacement means (32) serving to position the transmitter in M different positions, corresponding respectively to the M areas and in that the processing means (34) serve to carry out a reconstitution of the area insonified for each position of the transmitter.

6. Apparatus according to claim 5, characterized in that the displacement means (32) are translation means, in that the receivers (24) are also aligned in the direction of said translation and are equidistant of one another in accordance with a given spacing p, and in that the displacement means (32) also displace the assembly constituted by the transmitter (22) and the receivers by successive spacings less than the spacing of the receivers.

7. Apparatus according to one of the claims 5 and 6, characterized in that the receivers (24) are designed and oriented so as to have a spatial reception diagram enveloping the area insonified by the transmitter (22).

8. Apparatus according to any one of the claims 1 to 7, characterized in that the ultrasonic transmitter (22) is a focused transducer.

FIG. 1

FIG. 2

FIG. 3

FIG. 4A

FIG. 4B

FIG. 4C

FIG. 5

FIG. 6

FIG. 7

EP 0 124 442 B1

FIG. 8

EP 0 124 442 B1